(11) **EP 2 390 620 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**21.02.2018 Patentblatt 2018/08**

(51) Int Cl.:
**G01B 11/02** (2006.01)  **G01B 11/245** (2006.01)

(45) Hinweis auf die Patenterteilung:
**29.10.2014 Patentblatt 2014/44**

(21) Anmeldenummer: **11004261.1**

(22) Anmeldetag: **24.05.2011**

(54) **Optoelektronischer Sensor zur Detektion von Objektkanten**

Optoelectronic sensor for detecting object edges

Capteur optoélectronique destiné à la détection de bords d'objets

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2010 DE 102010022273**

(43) Veröffentlichungstag der Anmeldung:
**30.11.2011 Patentblatt 2011/48**

(73) Patentinhaber: **Sick AG**
**79183 Waldkirch (DE)**

(72) Erfinder:
- **Merettig, Gerhard**
  **79350 Sexau (DE)**
- **Bergbach, Roland**
  **76341 Kenzingen (DE)**
- **Goetz, Matthias**
  **79110 Freiburg (DE)**
- **Waslowski, Kai**
  **79312 Emmendingen (DE)**
- **Hörsch, Ingolf, Dr.**
  **79102 Freiburg (DE)**

(74) Vertreter: **Manitz Finsterwald Patentanwälte PartmbB**
**Postfach 31 02 20**
**80102 München (DE)**

(56) Entgegenhaltungen:

| | |
|---|---|
| EP-A2- 1 801 618 | EP-B1- 1 041 393 |
| DE-A1- 19 624 186 | DE-A1- 19 634 186 |
| DE-A1- 19 808 215 | DE-A1- 19 852 173 |
| DE-A1-102005 062 320 | DE-U1-202008 017 457 |
| JP-A- 58 223 004 | JP-A- S58 223 004 |
| US-A- 4 112 309 | US-A- 4 112 309 |
| US-A- 4 217 491 | US-A- 4 217 491 |
| US-A- 5 280 171 | US-A- 5 280 171 |
| US-A- 5 841 540 | US-A- 5 841 540 |

**Beschreibung**

Die vorliegende Erfindung betrifft einen optoelektronischen Sensor zur Detektion von Objektkanten von relativ zu dem Sensor bewegten Objekten gemäß den Merkmalen des Oberbegriffs des unabhängigen Anspruchs 1. Ein derartiger optoelektronischer Sensor ist aus dem Dokument US 5,841,540, US 4,217,491, JP 58-223004 A oder US 5,280,171 bekannt.

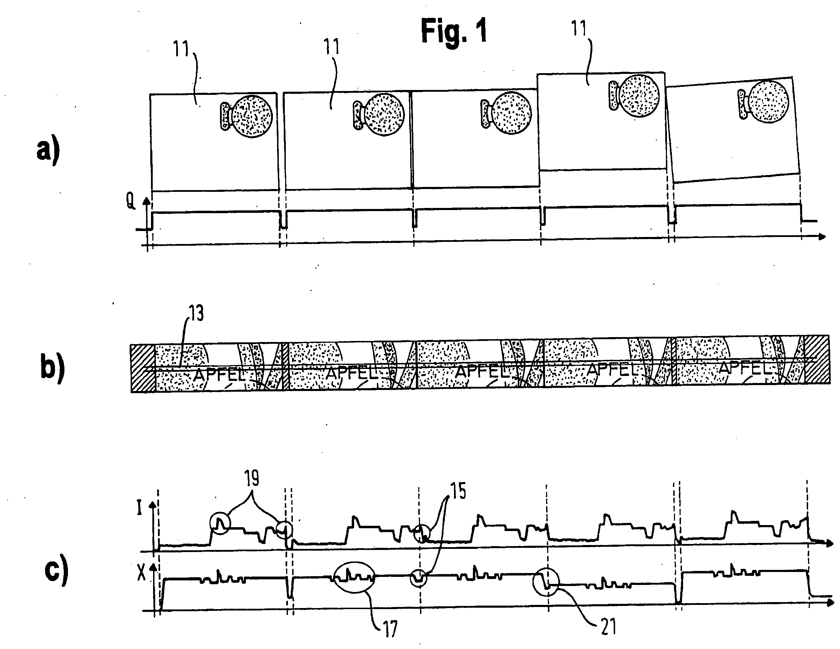

Häufig werden optoelektronische Sensoren dazu eingesetzt, entlang einem Förderband transportierte Verpackungen, beispielsweise Getränkekartons, für eine nachfolgende Weiterverarbeitung, beispielsweise eine Applikation eines Strohhalms, zu erkennen. In der Regel sind die Verpackungen hierbei jedoch nicht vereinzelt, sondern folgen so dicht aufeinander, dass beim Vorbeiführen der Verpackungen am Sensor der Übergang von einer Verpackung zur nächsten Verpackung mit einem herkömmlichen Triangulationstaster mit ortsauflösendem Lichtempfänger, dessen grundsätzliche Funktionsweise hinreichend bekannt ist und deshalb hier nicht näher erläutert wird, nur schwer zu erkennen ist, wie nachstehend anhand Fig. 1 verdeutlicht wird.

Fig. 1a zeigt eine Aufsicht auf mehrere unmittelbar hintereinander angeordnete Getränkekartons 11, die sich auf einem Förderband an einem Triangulationstaster vorbeibewegen, und ein Diagramm des zugehörigen gewünschten Verlaufs des Schaltsignals des Triangulationstasters. Fig. 1b zeigt einen Ausschnitt einer Seitenansicht der Getränkekartons 11 aus Fig. 1a und eine Abtastspur 13 eines durch den Sendelichtstrahl des Triangulationstasters auf den Getränkekartons 11 erzeugten Leuchtflecks. Fig. 1c zeigt den dabei aufgenommenen Verlauf eines Positionssignals X und den entsprechenden Verlauf eines Intensitätssignals I des Tasters.

Zwischen dem ersten und dem zweiten Getränkekarton (von links) ist eine große Lücke vorhanden, die über die beiden Signalen X und I ausreichend gut detektierbar ist. Liegt jedoch eine kleine Lücke vor, wie dies zwischen dem zweiten und dem dritten Getränkekarton der Fall ist, ist der zugehörige Übergang anhand der Verläufe X und I nicht mehr eindeutig erkennbar, wie bei 15 dargestellt ist. Darüber hinaus existieren weitere Fehlerquellen, die es erschweren, aus den Signalverläufen X und I, insbesondere durch einen oder mehrere Schwellwertvergleiche, das gewünschte Schaltsignal zu generieren. Beispielsweise führt die Abtastspur 13 über einen in Schwarz auf die Getränkekartons aufgedruckten Text, d.h. letztlich über eine inhomogene Textur, so dass der Schwerpunkt eines durch den Lichtempfänger aufgenommenen Abbilds des Leuchtflecks und damit das Positionssignal X entsprechend schwankt, wie bei 17 dargestellt ist. Außerdem kann ein glänzender Bereich, durch den das Licht zumindest teilweise gerichtet reflektiert wird, oder ein Versatz eines Getränkekarton senkrecht zur Förderrichtung das Intensitätssignal I stören, wie bei 19 bzw. 21 dargestellt ist. Diese Fehlerquellen können folglich einen höheren Signalhub hervorrufen als ein Übergang zwischen zwei aufeinander folgenden Getränkekartons, so dass die Kanten der Getränkekartons nicht robust detektierbar sind.

Aus dem Stand der Technik ist es bekannt, die Verpackungen an einer Schnittstelle zwischen einem langsameren und einem schnelleren Förderband gezielt zu beschleunigen, um große und damit gut detektierbare Lücken zu erzeugen. Derartige Anordnungen benötigen jedoch viel Platz und sind im Vergleich zu einem optoelektronischen Sensor allein sehr kostenintensiv.

Es ist daher Aufgabe der Erfindung, einen kostengünstigen optoelektronischen Sensor der eingangs genannten Art mit robuster Kantenerkennung anzugeben.

Diese Aufgabe wird durch einen optoelektronischen Sensor mit den Merkmalen des Anspruchs 1 gelöst.

Hierdurch kann der Übergang zwischen zwei aufeinander folgenden Objekten insbesondere anhand der hinteren Objektkante des in Bewegungsrichtung vorderen Objekts und/oder der vorderen Kante des hinteren Objekts erkannt werden. Bevorzugt sind die beiden Lichtempfänger dabei in einer insbesondere durch die Lichtsendeeinrichtung und die beiden Lichtempfänger gebildeten, insbesondere horizontal verlaufenden Empfängerebene angeordnet, die quer, insbesondere senkrecht zur Ausrichtung der Objektkanten verläuft.

Ist der jeweilige Sendelichtstrahl beispielsweise zumindest im Wesentlichen parallel zu einer Normalen einer dem Sensor zugewandten Flachseite des Objekts orientiert, fällt zumindest in etwa gleich viel Licht auf die beiden Lichtempfänger, d.h. die beiden Lichtempfänger detektieren zumindest in etwa dieselbe Empfangsintensität (balancierter Zustand). Trifft der Sendelichtstrahl auf die hintere Kante, fällt auf den in Bewegungsrichtung hinteren Lichtempfänger mehr Licht und auf den vorderen Lichtempfänger weniger Licht als in dem balancierten Zustand. Für die vordere Kante ist dies gerade umgekehrt. Die beiden Lichtempfänger stellen damit eine Art energetische Waage dar, die abhängig davon, ob es sich um eine hintere oder vordere Objektkante handelt, in verschiedene Richtungen ausschlagen kann.

Durch Vergleich, insbesondere Differenzbildung, der von den beiden Lichtempfängern aufgenommenen Empfangsintensitäten, die sich bei Auftreffen des Sendelichtstrahls auf ein Objekt im Bereich einer Kante bei gleichzeitiger Bewegung des Objekts entgegengesetzt zueinander ändern und daher einen großen Signalhub relativ zueinander aufweisen, kann dann eine Bewertung dahingehend vorgenommen werden, ob eine Lücke bzw. Objektkante vorliegt oder nicht. Durch einen derartigen Vergleich, der auf der energetischen Auswertung zweier Empfangsintensitäten beruht, können auch Kanten sehr dicht aneinander liegender Objekte bzw. kleine Lücken erkannt werden.

Eine Bewertung des Ergebnisses eines jeweiligen Vergleichs umfasst erfindungsgemäß, dass das Ergebnis des jeweiligen Vergleichs mit einem oder mehreren Ergebnissen eines oder mehrerer anderer Vergleiche gemeinsam bewertet wird. Basiert die Bewertung auf einem einzigen Ergebnis, z.B. einer Differenz aus den zwei Empfangsintensitäten, kann die Bewertung z.B. in einem Vergleich der Differenz mit einem Schwellwert bestehen.

Durch einen derartigen Sensor kann ein erheblicher Kostenvorteil gegenüber den aus dem Stand der Technik bekannten Realisierungen erzielt werden. Ein derartiger Sensor ermöglicht hohe Schaltfrequenzen bei gleichzeitig relativ geringem Stromverbrauch, und kann in relativ geringer Größe gebaut werden.

Die Auswerteeinheit ist dafür ausgebildet die Ergebnisse der Vergleiche wenigstens zweier Aufnahmen gemeinsam zu bewerten, wobei bevorzugt die gemeinsame Bewertung kontinuierlich bzw. zeitlich fortlaufend erfolgt.

Unter einer Aufnahme ist eine Aufnahme der durch die zwei Lichtempfänger aufgenommenen zwei Abbilder des Lichtflecks des Sendelichtstrahls eines Lichtsenders zu verstehen.

Ist die Fördergeschwindigkeit der Objekte bekannt, ist bei bekannter zu erkennender Lückenbreite dann auch bekannt, mit welchem zeitlichen Versatz nach der Detektion einer potentiellen hinteren Kante eine vordere Kante detektiert werden sollte, so dass die Robustheit der Kantenerkennung bereits mit lediglich einem Lichtsender noch erhöht werden kann. Insbesondere deshalb ist es bevorzugt, wenn die wenigstens zwei Aufnahmen zeitlich nacheinander bzw. zu wenigstens zwei verschiedenen Zeitpunkten erfolgen. Der Zeitabstand zwischen den wenigstens zwei Aufnahmen kann innerhalb eines vorgegebenen Zeitintervalls liegen.

Alternativ und/oder zusätzlich kann aber auch vorgesehen sein, dass die wenigstens zwei Aufnahmen durch die wenigstens zwei Lichtsender erfolgen. Es werden also wiederum zwei Aufnahmen gemeinsam bewertet, die in diesem Fall jedoch nicht einem einzigen Lichtsender zugeordnet sind, von dessen Lichtfleck nacheinander wenigstens zwei Aufnahmen aufgenommen werden, sondern wenigstens zwei Lichtsendern, durch die die wenigstens zwei Aufnahmen zumindest im Wesentlichen zeitgleich aufgenommen werden können, wobei "im Wesentlichen" sich insbesondere auf alternierend angesteuerte Lichtsender bezieht. Durch die wenigstens zwei Lichtsender können eine potentielle vordere Kante (durch den einen Lichtsender) und eine potentielle hintere Kante (durch den anderen Lichtsender) zumindest im Wesentlichen zeitgleich detektiert werden. Die Fördergeschwindigkeit der Objekte muss hierbei nicht bekannt sein. Insbesondere in diesem Fall ist es bevorzugt, wenn die zwei Lichtempfänger und der oder die Lichtsender in einer Linienanordnung vorgesehen bzw. in einer Reihe angeordnet und/oder in der vorgenannten Empfängerebene angeordnet sind.

Beispielsweise kann eine Differenz aus den zu den wenigstens zwei verschiedenen Zeitpunkten und/oder durch die wenigstens zwei Lichtsender erhaltenen, ggf. gewichteten beiden Einzeldifferenzen (der von den beiden Lichtempfängern aufgenommenen Empfangsintensitäten) gebildet werden, und diese Differenz kann mit einem Schwellwert verglichen werden. Grundsätzlich kann anstelle dieser Differenzbildung auch ganz allgemein ein Algorithmus verwendet werden, durch den die beiden Einzeldifferenzen miteinander verglichen und gemeinsam ausgewertet werden können.

Insbesondere kann der Sensor dafür ausgebildet sein, den Zeitabstand zwischen den wenigstens zwei Aufnahmen und/oder den Abstand der wenigstens zwei Lichtsender zueinander einem vorgegebenen erwarteten Abstand zwischen zwei benachbarten Objekten bzw. einer vorgegebenen Breite einer zwischen zwei benachbarten Objekten ausgebildeten Lücke anzupassen. Der Sensor kann dadurch auf verschiedene Lückenbreiten, insbesondere die gewünschte, zu detektierende Lückenbreite eingestellt werden.

Bevorzugt handelt es sich bei den wenigstens zwei Lichtempfängern um rein energetische Empfänger, d.h. um Empfänger, die keine Ortsauflösung besitzen. Derartige Empfänger bieten gegenüber ortsauflösenden Lichtempfängern einen Kostenvorteil. Insbesondere in diesem Fall ist es bevorzugt, wenn der Sensor dafür ausgebildet ist, die wenigstens zwei Lichtsender alternierend anzusteuern, so dass eine Unterscheidung der Aufnahmen verschiedener Lichtsender möglich ist. Sofern Lichtempfänger mit Ortsauflösung vorgesehen sind, werden bevorzugt durch die Auswerteeinheit lediglich die Empfangsintensitäten und keine Abstandinformationen ausgewertet.

Bevorzugt ist eine geradzahlige Anzahl von Lichtempfängern vorgesehen, wobei wenigstens vier Lichtempfänger vorgesehen sind, wobei jeweils zwei Lichtempfänger ein Paar von Lichtempfängern bilden, und wobei die beiden Lichtempfänger eines jeweiligen Paars auf den zwei einander gegenüberliegenden Seiten der Lichtsendeeinrichtung angeordnet sind, wobei bevorzugt die Auswerteeinheit dafür ausgebildet ist, für die Erkennung von Objektkanten nur ein ausgewähltes oder mehrere ausgewählte Paare heranzuziehen, wobei insbesondere die Anzahl der ausgewählten Paare geringer ist als die Anzahl der vorhandenen Paare. Es kann also das Paar bzw. die Paare von Lichtempfängern ausgewählt werden, das oder die für eine Kantenerkennung am besten geeignet sind. Werden mehrere Paare ausgewählt, ist es bevorzugt, wenn die Ergebnisse der mehreren Paare miteinander verrechnet und gemeinsam ausgewertet bzw. bewertet werden. Insbesondere sind die Paare in parallel zueinander verlaufenden Empfängerebenen bzw. übereinander angeordnet.

Beispielsweise kann es vorkommen, dass ein Objekt bezüglich einer in Förderrichtung verlaufenden Achse nach hinten gekippt ist, so dass dann auf ein in einer oberen Empfängerebene angeordnetes Paar aufgrund eines mit der Kippung der Objekts verbundenen Glanzeffekts besonders viel Licht zurückgespiegelt wird, wodurch dieses Paar geblendet und die Aufnahme dieses Paar gestört wird. Dieses obere Paar wird bei der Kantenerkennung deshalb nicht berücksichtigt. Zusätzlich und/oder alternativ kann es dann auch vorkommen, dass ein in einer unteren Empfängerebene angeordnetes Paar dann zu wenig Licht erhält, so dass auch die Aufnahme dieses Paar bei der Kantenerkennung nicht berücksichtigt wird. Insbesondere deshalb kann es bevorzugt sein, wenn die Auswahl von wenigstens einer der Empfangsintensitäten der durch die zwei Lichtempfänger des jeweiligen Paars aufgenommenen zwei Abbilder abhängig ist, wobei bevorzugt ein Paar nicht ausgewählt wird, wenn die wenigstens eine der Empfangsintensitäten einen vorgegebenen oberen Schwellwert überschreitet und/oder einen vorgegebenen unteren Schwellwert unterschreitet.

Nach einer Ausbildung der Erfindung ist/ sind wenigstens ein weiterer, insbesondere wenigstens zwei weitere, ortsauflösende Lichtempfänger vorgesehen. Hierdurch können die eingangs genannten weiteren Fehlerquellen beseitigt werden. Insbesondere können die zwei weiteren Lichtempfänger auf den anderen zwei einander gegenüberliegenden Seiten der Lichtsendeeinrichtung angeordnet sein.

Vorzugsweise ist die Auswerteeinheit dafür ausgebildet ist, die mittels Triangulation aus den Lagen der durch die zwei weiteren Lichtempfänger aufgenommenen zwei Abbilder des jeweiligen Lichtflecks bestimmten zwei Abstände miteinander zu verrechnen und das Ergebnis der jeweiligen Verrechnung zu bewerten, wobei bevorzugt bei der jeweiligen Verrechnung ein insbesondere gewichteter Mittelwert aus den zwei Abständen gebildet wird. Hierdurch können nachteilige Effekte, wie sie durch eine inhomogene Textur hervorgerufen werden, vermieden werden, da eine Schwerpunktverschiebung bei dem einen der beiden weiteren Lichtempfänger durch eine entgegengesetzte, betragsmäßig gleiche Schwerpunktverschiebung bei dem anderen der beiden weiteren Lichtempfänger ausgeglichen werden kann.

Bevorzugt hängt die Gewichtung von den zwei Empfangsintensitäten der durch die zwei weiteren Lichtempfänger aufgenommenen zwei Abbilder des jeweiligen Lichtflecks ab, wobei bevorzugt die relative Gewichtung des aus der Lage des jeweiligen Abbilds bestimmten Abstands umso kleiner ist, je größer die relative Empfangsintensität des jeweiligen Abbilds ist. Hierdurch können durch Glanzeffekte bzw. Reflexion verursachte Fehler bei der Kantendetektion weitgehend unterdrückt werden, da durch einen glänzenden Bereich normalerweise nur die Abstandsbestimmung eines der beiden weiteren Lichtempfänger gestört wird. Der "gestörte" Lichtempfänger weist gegenüber dem anderen weiteren Lichtempfänger dann eine erhöhte Empfangsintensität auf, so dass - sofern eine erhöhte Empfangsintensität festgestellt wird - der entsprechende Abstand bei der Mittelwertbildung geringer gewichtet werden kann.

Dieser Aspekt der vorliegenden Erfindung und Weiterbildungen davon werden auch unabhängig von den wenigstens zwei Lichtempfängern beansprucht, d.h. die Erfindung betrifft auch einen optoelektronischen Sensor zur Erkennung von Objektkanten von relativ zu dem Sensor bewegten Objekten, mit einer Lichtsendeeinrichtung mit wenigstens einem Lichtsender, insbesondere wenigstens zwei Lichtsendern, zur Erzeugung eines jeweiligen kollimierten oder fokussierten Sendelichtstrahls, mit wenigstens zwei Lichtempfängern zur Aufnahme eines durch den jeweiligen Sendelichtstrahl auf einem jeweiligen Objekt erzeugten Lichtflecks, wobei die zwei Lichtempfänger auf zwei einander gegenüberliegenden Seiten der Lichtsendeeinrichtung angeordnet sind, und mit einer Auswerteeinheit, die dafür ausgebildet ist, die mittels Triangulation aus den Lagen der durch die zwei Lichtempfänger aufgenommenen zwei Abbilder des jeweiligen Lichtflecks bestimmten zwei Abstände miteinander zu verrechnen und das Ergebnis der jeweiligen Verrechnung zu bewerten, um eine Objektkante zu erkennen, wobei bei der jeweiligen Verrechnung ein gewichteter Mittelwert aus den zwei Abständen gebildet wird, und wobei die Gewichtung von den zwei Empfangsintensitäten der durch die zwei weiteren Lichtempfänger aufgenommenen zwei Abbilder des jeweiligen Lichtflecks abhängt.

Darüber hinaus kann es vorgesehen sein, dass die Auswerteeinheit dafür ausgebildet ist, die Ergebnisse der Verrechnungen für die wenigstens zwei Lichtsender gemeinsam zu bewerten. Dies ermöglicht insbesondere, eine Störung bei der Kantendetektion durch ein relativ zu den anderen Objekten senkrecht zur Förderrichtung versetztes Objekt zu vermeiden, da hierdurch erkannt werden kann, wenn die den wenigstens zwei Lichtsendern zugeordneten Lichtflecke auf unterschiedliche Objekte fallen. Insbesondere in diesem Fall ist es wiederum bevorzugt, wenn der Sensor dafür ausgebildet ist, die wenigstens zwei Lichtsender alternierend anzusteuern, so dass eine Unterscheidung der Empfangsintensitäten und ermittelten Abstände verschiedener Lichtsender möglich ist.

Nach einer anderen Ausbildung der Erfindung umfassen die Lichtsendeeinrichtung und die wenigstens zwei Lichtempfänger und/oder wenigstens zwei weiteren Lichtempfänger jeweils einen Polarisationsfilter, wobei bevorzugt sämtliche Polarisationsfilter des Sensors entweder lineare Polarisationsfilter oder zirkulare Polarisationsfilter sind und/oder wobei bevorzugt die Polarisationsrichtung des Polarisationsfilters des jeweiligen Lichtempfängers und/oder jeweiligen weiteren Lichtempfängers der Polarisationsrichtung des Polarisationsfilters der Lichtsendeeinrichtung zumindest im Wesentlichen entgegengesetzt ist oder entspricht. Bei einer Ausbildung des Sensors mit linearen Polarisationsfiltern ist der jeweilige Sendelichtstrahl linear polarisiert. Bei einer Reflektion an einem Objekt bleibt die Polarisation des Lichts erhalten, bei einer Remission geht die Polarisation verloren. Durch entgegengesetzt ausgerichtete, d.h. um zumindest im Wesentlichen 90° gegeneinander gedrehte lineare Polarisationsfilter kann reflektiertes Licht, welches bei der Abstandsbestimmung Fehler verursacht, zumindest großteils ausgeblendet werden. Bei einer Ausbildung des Sensors mit zirkularen Polarisationsfiltern ist der jeweilige Sendelichtstrahl in eine von zwei Drehrichtungen, links oder rechts zirkular polarisiert. Bei einer Reflektion an einem Objekt wird die Drehrichtung der Polarisation des Lichts umgekehrt bzw. gedreht, bei einer Remission geht die Polarisation verloren. Durch gleichgerichtete, d.h. die gleiche Drehrichtung aufweisende Polarisationsfilter kann reflektiertes Licht wiederum zumindest großteils ausgeblendet werden.

Die vorliegende Erfindung betrifft ferner ein Verfahren gemäß Anspruch 12.

Bevorzugte Ausführungsformen des erfindungsgemäßen Verfahrens ergeben sich in analoger Weise aus den bevorzugten Ausgestaltungen des erfindungsgemäßen Bildsensors.

Nicht beschränkende Ausführungsbeispiele der Erfindung sind in der Zeichnung dargestellt und werden nachfolgend beschrieben.

Fig. 1 in einer Reihe angeordnete Getränkekartons sowie die von einem herkömmlichen Triangulationstaster hierzu ermittelten Signale,

Fig. 2 einen optoelektronischen Sensor gemäß einer Ausbildung der Erfindung in einer Draufsicht, und

Fig. 3 einen optoelektronischen Sensor gemäß einer anderen Ausbildung der Erfindung in einer Rückansicht.

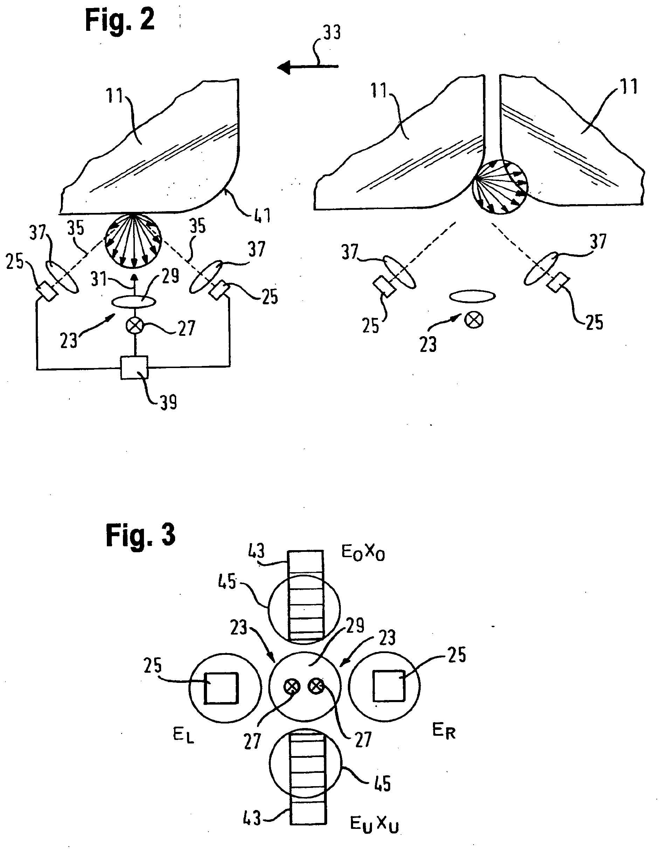

Der in Fig. 2 dargestellte Sensor umfasst eine Lichtsendeeinrichtung mit einem Lichtsender 23 und zwei in einer Empfängerebene zumindest im Wesentlichen symmetrisch zu beiden Seiten, d.h. links und rechts des Lichtsenders 23 angeordnete Lichtempfänger 25. Der Lichtsender 23, der eine Lichtquelle 27 und eine Sendelinse 29 umfasst, sendet einen kollimierten oder fokussierten Sendelichtstrahl 31 aus, der auf Getränkekartons 11 fällt, die in Förderrichtung 33 an dem Sensor vorbeibewegt werden. Dort erzeugt der Sendelichtstrahl 31 einen Lichtfleck. Der Sendelichtstrahl 31 steht dabei zumindest im Wesentlichen senkrecht auf den dem Sensor zugewandten Seiten der Getränkekartons 11.

Das am Ort des Lichtflecks remittierte Licht mit Lambert-Charakteristik kehrt als Empfangslichtstrahlen 35 zu dem Sensor zurück und wird über Empfangslinsen 37 in den Lichtempfängern 25 detektiert. Bei den Lichtempfängern 25 handelt es sich um rein energetische Empfänger ohne Ortsauflösung, so dass dort lediglich die Empfangsintensitäten der durch die Lichtempfänger 25 aufgenommenen Abbilder des Lichtflecks erfasst werden. Darüber hinaus ist eine mit dem Lichtsender 23 und den Lichtempfängern 25 verbundene Steuer- und Auswerteeinheit 39 vorgesehen, um die Lichtsender 23 anzusteuern und die vorgenannten Empfangsintensitäten auszuwerten.

Trifft der Sendelichtstrahl 31 außerhalb einer Kante 41 auf einen Getränkekarton 11 auf (linkes Bild), entspricht die durch den in Förderrichtung 33 vorderen Lichtempfänger 25 detektierte Empfangsintensität zumindest in etwa der durch den in Förderrichtung 33 hinteren Lichtempfänger 25 detektierten Empfangsintensität, da zumindest in etwa gleich viel Licht auf die beiden Lichtempfänger 25 fällt. Eine Kante 41 liegt daher nicht vor. Trifft der Sendelichtstrahl 31 hingegen im Bereich der Kante 41 auf den Getränkekarton 11 auf (rechtes Bild), fällt aufgrund der Rundung der Kante 41 deutlich mehr Licht auf den in Förderrichtung 33 hinteren Lichtempfänger 25, so dass die Empfangsintensitäten der beiden Lichtempfänger 25 deutlich voneinander abweichen.

Die Differenz der beiden Empfangsintensitäten kann daher als Kriterium für das Vorliegen einer Kante 41 verwendet werden. Insbesondere ist das Kriterium erfüllt, wenn die Differenz einen vorgegebenen Schwellwert überschreitet. Hierdurch können auch sehr dicht aneinander gereihte Getränkekartons 11 bzw. kleine Lücken zwischen Getränkekartons 11 detektiert werden.

Auf die hintere Kante 41 des einen Getränkekartons 11 folgt mit einem gewissen zeitlichen Abstand, dessen Grenzen sich aus der Fördergeschwindigkeit der Getränkekartons 11 und den potentiellen Abständen der Getränkekartons 11 zueinander ergeben, die vordere Kante 41 des nächsten Getränkekartons 11, wobei die Differenz für die beiden Kanten 41 entgegengesetzte Vorzeichen besitzt. Durch das Bewertungskriterium, ob auf eine hintere Kante 41 innerhalb eines vorgegeben Zeitintervalls eine vordere Kante 41 folgt, kann die Robustheit der Lücken- bzw. Kantenerkennung noch erhöht werden. Insbesondere kann die Differenz aus der Differenz für die hintere Kante 41 und der Differenz für die vordere Kante 41 gebildet und mit einem Schwellwert verglichen werden, wobei bei Überschreiten des Schwellwerts das Kriterium für das Vorliegen einer Lücke bzw. einer vorderen und hinteren Kante 41 erfüllt ist. Das Vorzeichen dieser übergeordneten Differenz hängt dabei allerdings von der Förderrichtung 33 ab.

Bei dem in Fig. 3 vereinfacht dargestellten Sensor handelt es sich um eine Weiterbildung des in Fig. 2 gezeigten Sensors. Abweichend von dem in Fig. 2 gezeigten Sensor umfasst der Sensor gemäß Fig. 3 nicht nur einen, sondern zwei Lichtsender 23, die alternierend angesteuert werden und die zusammen mit den beiden Lichtempfängern 25 in einer horizontal Reihe angeordnet sind, sowie zusätzlich zwei weitere, ortsauflösende Lichtempfänger 43 mit Empfangslinsen 45. Die beiden Lichtsender 23 umfassen zwei Lichtquellen 27 und eine gemeinsame Sendelinse 29.

Grundsätzlich können aber auch zwei Sendelinsen vorgesehen sein, oder lediglich eine Lichtquelle, aus deren Lichtstrahlen im Weiteren zwei Sendelichtstrahlen erzeugt werden. Bei den Lichtsendern 23 handelt es sich vorzugsweise um Laser oder LEDs. Die beiden Lichtempfänger 25 liefern nur Empfangsintensitäten, die beiden weiteren Lichtempfänger 43 jeweils zusätzlich eine Positions- bzw. Abstandsinformation. Grundsätzlich können aber auch die beiden Lichtempfänger 25 als ortsauflösende Lichtempfänger ausgebildet sein und/oder eine Positions- bzw. Abstandsinformation liefern.

Die beiden weiteren Lichtempfänger 43 sind zumindest im Wesentlichen symmetrisch oberhalb und unterhalb der Lichtsendeeinrichtung bzw. in einer weiteren Empfängerebene angeordnet, die senkrecht auf der durch die Lichtsender 23 und die Lichtempfänger 25 gebildeten Empfängerebene steht. In der gezeigten Rückansicht sind die Lichtempfänger 25 und die weiteren Lichtempfänger 43 kreisförmig, jeweils um 90° gegeneinander versetzt, um die Lichtsendeeinrichtung verteilt. Bei den weiteren Lichtempfängern 43 kann es sich beispielsweise um einzeilige Bildsensoren oder Bildsensoren mit Pixelmatrix handeln, oder um PIN-Dioden.

Durch die beiden Lichtsender 23 können für eine zu der vorgenannten Differenzbildung analoge Differenzbildung eine hintere Kante 41 und eine vordere Kante 41 im Wesentlichen gleichzeitig detektiert werden. Die beiden Lichtempfänger 25 besitzen dabei eine ausreichend große Empfangsfläche, um die Abbilder sowohl des Lichtflecks des Sendelichtstrahls 31 des ersten Lichtsenders 23 als auch des Lichtflecks des Sendelichtstrahls 31 des zweiten Lichtsenders 23 aufnehmen zu können.

Das entsprechende Kriterium für das Vorliegen eines Objekts lautet:

$$(1) \quad \frac{E_{L1} - E_{R1}}{E_{L1} + E_{R1} + M} - \frac{E_{L2} - E_{R2}}{E_{L2} + E_{R2} + M} < \text{Grenzwert 1,}$$

wobei $E_{L1}$ die Empfangsintensität des linken Lichtempfängers für den ersten Lichtsender, $E_{R1}$ die Empfangsintensität des rechten Lichtempfängers für den ersten Lichtsender, $E_{L2}$ die Empfangsintensität des linken Lichtempfängers für den zweiten Lichtsender und $E_{R2}$ die Empfangsintensität des rechten Lichtempfängers für den zweiten Lichtsender ist, und wobei $M \neq 0$, wodurch bei Empfangsintensitäten von 0 eine Division durch 0 verhindert werden soll.

Diese Differenz nimmt bei gleichzeitiger Detektion der beiden Kanten 41 einen Maximalwert an, der der Summe aus dem Betrag der Differenz für die vordere Kante 41 und dem Betrag der Differenz für die hintere Kante 41 entspricht und der den Grenzwert 1 überschreitet, so dass das Kriterium für das Vorliegen einer Lücke 41 erfüllt ist. Das Vorzeichen dieser Differenz ist dabei unabhängig von der Förderrichtung 33.

Durch den ersten oder zweiten Lichtsender 23 und die beiden weiteren Lichtempfänger 43 werden zwei Triangulationstaster realisiert, durch die jeweils der Abstand eines Getränkekartons 11 vom Sensor berechnet werden kann. Da die weiteren Lichtempfänger 43 symmetrisch um die Lichtsender 23 angeordnet sind, kann eine durch eine inhomogene Textur auf dem jeweiligen Getränkekarton 11 hervorgerufene Störung der beiden berechneten Abstände ausgeglichen werden. Hierzu wird ein Mittelwert aus den beiden berechneten Abständen gebildet, da bei der zugehörigen Addition sich die durch die Störung in den beiden berechneten Abständen verursachten Fehler zumindest weitgehend gegeneinander aufheben.

Bei der Mittelwertbildung können die beiden berechneten Abstände gewichtet werden. Die Gewichtung des jeweiligen berechneten Abstands ist dabei umso größer, je kleiner die relative Empfangsintensität auf dem jeweiligen weiteren Lichtempfänger 43 ist. Dies ist insbesondere deshalb vorteilhaft, da hierdurch ein berechneter Abstand, der aufgrund eines Glanzeffekts fehlerhaft ist, geringer gewichtet wird. Hierdurch kann der Objektabstand mit besonderer Genauigkeit ermittelt und dadurch eine besonders robuste Hintergrundausblendung erreicht werden.

Das entsprechende Kriterium für das Vorliegen eines Objekts lautet dann:

$$(2) \quad \frac{1}{2}\left( X_{O1} \frac{E_{U1}}{E_{O1} + E_{U1}} + X_{U1} \frac{E_{O1}}{E_{O1} + E_{U1}} \right) < \text{Grenzwert 2,}$$

wobei $E_{U1}$ die Empfangsintensität des unteren Lichtempfängers für den ersten Lichtsender, $E_{O1}$ die Empfangsintensität des oberen Lichtempfängers für den ersten Lichtsender, $X_{O1}$ der ermittelte Abstand des oberen Lichtempfängers für den ersten Lichtsender und $X_{U1}$ der ermittelte Abstand des unteren Lichtempfängers für den ersten Lichtsender ist.

Da zwei Lichtsender 23 vorhanden sind, kann ein gegenseitiger Versatz zweier aufeinander folgende Getränkekartons 11 senkrecht zur Förderrichtung 33 erkannt werden (d.h. es liegt eine Kante vor), wenn der Sendelichtstrahl 31 des einen der beiden Lichtsender 23 auf den einen Getränkekarton 11 und der Sendelichtstrahl 31 des anderen Lichtsenders 23 auf den anderen Getränkekarton 11 fällt.

Das entsprechende Kriterium für das Vorliegen eines Objekts lautet in diesem Fall:

$$(3) \quad \left( X_{O1} \frac{E_{U1}}{E_{O1} + E_{U1}} + X_{U1} \frac{E_{O1}}{E_{O1} + E_{U1}} \right) -$$

$$\left( X_{O2} \frac{E_{U2}}{E_{O2} + E_{U2}} + X_{U2} \frac{E_{O2}}{E_{O2} + E_{U2}} \right) < \text{Grenzwert } 3,$$

wobei, $E_{U2}$ die Empfangsintensität des unteren Lichtempfängers für den zweiten Lichtsender, $E_{O2}$ die Empfangsintensität des oberen Lichtempfängers für den zweiten Lichtsender, $X_{O2}$ der ermittelte Abstand des oberen Lichtempfängers für den zweiten Lichtsender und $X_{U2}$ der ermittelte Abstand des unteren Lichtempfängers für den zweiten Lichtsender ist.

Darüber hinaus ist es bevorzugt, wenn im Sinne einer Hintergrundausblendung ein Kriterium für das Vorliegen eines Objekts aufgestellt wird, das auf die durch die beiden weiteren Lichtempfänger 43 empfangene Gesamtenergie abstellt:

$$(4) \quad E_U + E_O > \text{Grenzwert } 4,$$

wobei Eu die Empfangsintensität des unteren Lichtempfängers für den ersten und/oder zweiten Lichtsender und Eo die Empfangsintensität des oberen Lichtempfängers für den ersten und/oder zweiten Lichtsender ist.

Der Sensor gemäß Fig. 3 ist bevorzugt derart ausgebildet, dass ein Objektfeststellungssignal ausgegeben wird, d.h. dass die Anwesenheit eines Getränkekartons 11 erkannt wird, wenn die Bedingungen (1) bis (4) erfüllt sind. Ist wenigstens eine der genannten Bedingungen nicht erfüllt, liegt ein Übergang zwischen zwei aufeinander folgenden Getränkekartons 11 vor bzw. es wird ein Kante 41 erkannt.

Mit der vorliegenden Erfindung kann eine besonders robuste Kantenerkennung erreicht werden.

Bezugszeichenliste

| | |
|---|---|
| 11 | Getränkekarton |
| 13 | Abtastspur |
| 15 | kleine Lücke |
| 17 | inhomogene Textur |
| 19 | glänzender Bereich |
| 21 | Versatz |
| 23 | Lichtsender |
| 25 | Lichtempfänger |
| 27 | Lichtquelle |
| 29 | Sendelinse |
| 31 | Sendelichtstrahl |
| 33 | Förderrichtung |
| 35 | Empfangslichtstrahl |
| 37 | Empfangslinse |
| 39 | Steuer- und Auswerteeinheit |
| 41 | Kante |
| 43 | weiterer Lichtempfänger |
| 45 | Empfangslinse |

**Patentansprüche**

1. Optoelektronischer Sensor zur Erkennung von Objektkanten von relativ zu dem Sensor bewegten Objekten, mit einer Lichtsendeeinrichtung mit wenigstens einem Lichtsender (23), insbesondere wenigstens zwei Lichtsendern, zur Erzeugung eines jeweiligen kollimierten oder fokussierten Sendelichtstrahls (31), mit wenigstens zwei Lichtempfängern (25) zur Aufnahme eines durch den jeweiligen Sendelichtstrahl (31) auf einem Objekt (11) erzeugten Lichtflecks, wobei die zwei Lichtempfänger (25) auf zwei einander gegenüberliegenden Seiten der Lichtsendeeinrichtung angeordnet sind, und

mit einer Auswerteeinheit (39), die dafür ausgebildet ist, die zwei Empfangsintensitäten der durch die zwei Lichtempfänger (25) aufgenommenen zwei Abbilder des jeweiligen Lichtflecks miteinander zu vergleichen und das Ergebnis des jeweiligen Vergleichs zu bewerten, um eine Objektkante (41) zu erkennen,

**dadurch gekennzeichnet,**

**dass** die Bewertung des Ergebnisses des jeweiligen Vergleichs umfasst,

**dass** das Ergebnis des jeweiligen Vergleichs mit einem oder mehreren Ergebnissen eines oder mehrerer anderer Vergleiche gemeinsam bewertet wird, und die Auswerteeinheit dafür ausgebildet ist, die Ergebnisse der Vergleiche wenigstens zweier Aufnahmen gemeinsam zu bewerten, wobei eine Aufnahme eine Aufnahme der durch die wenigstens zwei Lichtempfänger aufgenommenen zwei Abbilder des Lichtflecks des Sendelichtstrahls des wenigstens einen Lichtsenders ist.

2. Sensor nach Anspruch 1,
   **dadurch gekennzeichnet,**
   **dass** die wenigstens zwei Aufnahmen zeitlich nacheinander und/oder durch die wenigstens zwei Lichtsender (23) erfolgen.

3. Sensor nach Anspruch 2,
   **dadurch gekennzeichnet,**
   **dass** der Sensor dafür ausgebildet ist, den Zeitabstand zwischen den wenigstens zwei Aufnahmen und/oder den Abstand der wenigstens zwei Lichtsender (23) zueinander einem vorgegebenen erwarteten Abstand zwischen zwei benachbarten Objekten (11) anzupassen.

4. Sensor nach zumindest einem der vorstehenden Ansprüche,
   **dadurch gekennzeichnet,**
   **dass** eine geradzahlige Anzahl von Lichtempfängern (25) vorgesehen ist, wobei wenigstens vier Lichtempfänger (25) vorgesehen sind, wobei jeweils zwei Lichtempfänger (25) ein Paar von Lichtempfängern (25) bilden, und wobei die beiden Lichtempfänger (25) eines jeweiligen Paars auf den zwei einander gegenüberliegenden Seiten der Lichtsendeeinrichtung angeordnet sind, wobei bevorzugt die Auswerteeinheit (39) dafür ausgebildet ist, für die Erkennung von Objektkanten (41) nur ein ausgewähltes oder mehrere ausgewählte Paare heranzuziehen, wobei insbesondere die Anzahl der ausgewählten Paare geringer ist als die Anzahl der vorhandenen Paare.

5. Sensor nach Anspruch 4,
   **dadurch gekennzeichnet,**
   **dass** die Auswahl von wenigstens einer der Empfangsintensitäten der durch die zwei Lichtempfänger (25) des jeweiligen Paars aufgenommenen zwei Abbilder abhängig ist, wobei bevorzugt ein Paar nicht ausgewählt wird, wenn die wenigstens eine der Empfangsintensitäten einen vorgegebenen oberen Schwellwert überschreitet und/oder einen vorgegebenen unteren Schwellwert unterschreitet.

6. Sensor nach zumindest einem der vorstehenden Ansprüche,
   **dadurch gekennzeichnet,**
   **dass** die zwei Lichtempfänger (25) und der oder die Lichtsender (23) in einer Linienanordnung vorgesehen sind und/oder dass der Sensor dafür ausgebildet ist, die wenigstens zwei Lichtsender (23) alternierend anzusteuern.

7. Sensor nach zumindest einem der vorstehenden Ansprüche,
   **dadurch gekennzeichnet,**
   **dass** wenigstens ein weiterer, insbesondere wenigstens zwei weitere, ortsauflösende Lichtempfänger (43) vorgesehen sind, wobei bevorzugt die zwei weiteren Lichtempfänger (43) auf den anderen zwei einander gegenüberliegenden Seiten der Lichtsendeeinrichtung angeordnet sind.

8. Sensor nach Anspruch 7,
   **dadurch gekennzeichnet,**
   **dass** die Auswerteeinheit (39) dafür ausgebildet ist, die mittels Triangulation aus den Lagen der durch die zwei weiteren Lichtempfänger (43) aufgenommenen zwei Abbilder des jeweiligen Lichtflecks bestimmten zwei Abstände miteinander zu verrechnen und das Ergebnis der jeweiligen Verrechnung zu bewerten, wobei bevorzugt bei der jeweiligen Verrechnung ein insbesondere gewichteter Mittelwert aus den zwei Abständen gebildet wird.

**9.** Sensor nach Anspruch 8,
**dadurch gekennzeichnet,**
**dass** die Gewichtung von den zwei Empfangsintensitäten der durch die zwei weiteren Lichtempfänger (43) aufgenommenen zwei Abbilder des jeweiligen Lichtflecks abhängt, wobei bevorzugt die relative Gewichtung des aus der Lage des jeweiligen Abbilds bestimmten Abstands umso kleiner ist, je größer die relative Empfangsintensität des jeweiligen Abbilds ist.

**10.** Sensor nach Anspruch 8 oder 9,
**dadurch gekennzeichnet,**
**dass** die Auswerteeinheit (39) dafür ausgebildet ist, die Ergebnisse der Verrechnungen für die wenigstens zwei Lichtsender (23) gemeinsam zu bewerten.

**11.** Sensor nach zumindest einem der vorstehenden Ansprüche,
**dadurch gekennzeichnet,**
**dass** die Lichtsendeeinrichtung und die wenigstens zwei Lichtempfänger (25) und/oder wenigstens zwei weitere Lichtempfänger (43) jeweils einen Polarisationsfilter umfassen, wobei bevorzugt sämtliche Polarisationsfilter des Sensors entweder lineare Polarisationsfilter oder zirkulare Polarisationsfilter sind und/oder wobei bevorzugt die Polarisationsrichtung des Polarisationsfilters des jeweiligen Lichtempfängers und/oder jeweiligen weiteren Lichtempfängers der Polarisationsrichtung des Polarisationsfilters der Lichtsendeeinrichtung entgegengesetzt ist oder entspricht.

**12.** Verfahren zur Detektion von Objektkanten von relativ zu einem optoelektronischen Sensor bewegten Objekten, bei dem
durch eine Lichtsendeeinrichtung wenigstens ein, insbesondere zwei jeweils kollimierte oder fokussierte Sendelichtstrahlen erzeugt werden,
ein durch den jeweiligen Sendelichtstrahl auf einem Objekt erzeugter Lichtfleck durch zwei auf zwei einander gegenüberliegenden Seiten der Lichtsendeeinrichtung angeordnete Lichtempfänger aufgenommen wird,
die zwei Empfangsintensitäten der durch die zwei Lichtempfänger aufgenommenen zwei Abbilder des jeweiligen Lichtflecks miteinander verglichen werden und das Ergebnis des jeweiligen Vergleichs bewertet wird, um eine Objektkante zu erkennen,
**dadurch gekennzeichnet,**
**dass** die Bewertung des Ergebnisses des jeweiligen Vergleichs umfasst,
**dass** das Ergebnis des jeweiligen Vergleichs mit einem oder mehreren Ergebnissen eines oder mehrerer anderer Vergleiche gemeinsam bewertet wird, und die Ergebnisse der Vergleiche wenigstens zweier Aufnahmen gemeinsam bewertet werden, wobei eine Aufnahme eine Aufnahme der durch die wenigstens zwei Lichtempfänger aufgenommenen zwei Abbilder des Lichtflecks des Sendelichtstrahls des wenigstens einen Lichtsenders ist.

**Claims**

**1.** An optoelectronic sensor for recognizing object edges of objects moved relative to the sensor,
having a light transmission device with at least one light transmitter (23), in particular at least two light transmitters, for producing a respective collimated or focused transmitted light beam (31); having at least two light receivers (25) for imaging a light spot produced on an object (11) by the respective transmitted light beam (31), wherein the two light receivers (25) are arranged on two mutually opposite sides of the light transmission device; and having an evaluation unit (39) which is designed to compare the two received intensities of the two images of the respective light spot taken by the two light receivers (25) with one another and to assess the result of the respective comparison to recognize an object edge (41),
**characterized in that**
the assessment of the result of the respective comparison comprises the result of the respective comparison being jointly assessed with one or more results of one or more other comparisons; and **in that** the evaluation unit is designed to jointly assess the results of the comparisons of at least two imagings, with an imaging being an imaging of the two images of the light spot of the transmitted light beam of the at least one light transmitter taken by the at least two light receivers.

**2.** A sensor in accordance with claim 1,
**characterized in that**
the at least two imagings take place sequentially in time and/or by the at least two light transmitters (23).

**3.** A sensor in accordance with claim 2,
**characterized in that**
the sensor is designed to adapt the time interval between the at least two imagings and/or the distance of the at least two light transmitters (23) from one another to a defined expected distance between two adjacent objects (11).

**4.** A sensor in accordance with at least one of the preceding claims,
**characterized in that**
an even number of light receivers (25) is provided, with at least four light receivers (25) being provided, with two respective light receivers (25) forming a pair of light receivers (25), and with the two light receivers (25) of a respective pair being arranged on the two mutually opposite sides of the light transmission device, with the evaluation unit (39) preferably being designed to use only one selected pair or a plurality of selected pairs for the recognition of object edges (41), with in particular the number of the selected pairs being smaller than the number of pairs present.

**5.** A sensor in accordance with claim 4,
**characterized in that**
the selection is dependent on at least one of the received intensities of the two images taken by the two light receivers (25) of the respective pair, with one pair preferably not being selected when the at least one of the received intensities exceeds a defined upper threshold value and/or falls below a defined lower threshold value.

**6.** A sensor in accordance with at least one of the preceding claims,
**characterized in that**
the two light receivers (25) and the light transmitter or transmitters (23) is/are provided in a linear arrangement; and/or **in that** the sensor is designed to control the at least two light transmitters (23) alternately.

**7.** A sensor in accordance with at least one of the preceding claims,
**characterized in that**
at least one further spatially resolving light receiver, in particular at least two further spatially resolving light receivers (43), is/are provided, with the two further light receivers (43) preferably being arranged on the other two mutually opposite sides of the light transmission device.

**8.** A sensor in accordance with claim 7,
**characterized in that**
the evaluation unit (39) is designed to mutually set off the two distances determined by means of triangulation from the positions of the two images of the respective light spot taken by the two further light receivers (43) and to assess the result of the respective setting off, with an in particular weighted average value preferably being formed from the two distances in the respective setting off.

**9.** A sensor in accordance with claim 8,
**characterized in that**
the weighting depends on the two received intensities of the two images of the respective light spot taken by the two further light receivers (43), with the relative weighting of the distance determined from the position of the respective image preferably being the smaller, the larger the relative received intensity of the respective image is.

**10.** A sensor in accordance with claim 8 or claim 9,
**characterized in that**
the evaluation unit (39) is designed to jointly assess the results of the setting off processes for the at least two light transmitters (23).

**11.** A sensor in accordance with at least one of the preceding claims,
**characterized in that**
the light transmission device and the at least two light receivers (25) and/or at least two further light receivers (43) each include a polarization filter, with all polarization filters of the sensor preferably being either linear polarization filters or circular polarization filters, and/or with the polarization direction of the polarization filter of the respective light receiver and/or of the respective further light receiver preferably being opposite to or corresponding to the polarization direction of the polarization filter of the light transmission device.

**12.** A method of detecting object edges of objects moved relative to an optoelectronic sensor, in which at least one, in particular two, respectively collimated or focused transmitted light beams are produced by a light transmission device;
a light spot produced by the respective transmitted light beam on an object is imaged by two light receivers arranged on two mutually opposite sides of the light transmission device; and
the two received intensities of the two images of the respective light spot taken by the two light receivers are compared with one another and the result of the respective comparison is assessed to recognize an object edge,
**characterized in that**
the assessment of the result of the respective comparison comprises the result of the respective comparison being jointly assessed with one or more results of one or more other comparisons; and **in that** the results of the comparisons of at least two imagings are jointly assessed, with an imaging being an imaging of the two images of the light spot of the transmitted light beam of the at least one light transmitter taken by the at least two light receivers.

**Revendications**

**1.** Capteur optoélectronique pour reconnaître des arêtes sur des objets en déplacement par rapport au capteur, comprenant un système émetteur de lumière avec au moins un émetteur de lumière (23), en particulier au moins deux émetteurs de lumière, pour engendrer un faisceau de lumière émise (31) respectif collimaté ou focalisé, comprenant au moins deux récepteurs de lumière (25) pour prendre un vue d'une tache lumineuse engendrée sur un objet (11) par le faisceau de lumière émise respectif (31), les deux récepteurs de lumière (25) étant agencés sur des côtés mutuellement opposés du système émetteur de lumière, et
comprenant une unité d'évaluation (39) qui est réalisée pour comparer l'une à l'autre deux intensités de réception des deux images, prises par les deux récepteurs de lumière (25), de la tache lumineuse respective, et d'évaluer le résultat de la comparaison respective afin de reconnaître une arête (41) d'un objet,
**caractérisé en ce que**
l'évaluation du résultat de la comparaison respective inclut d'évaluer le résultat de la comparaison respective conjointement avec un ou plusieurs résultats d'une ou de plusieurs autres comparaisons,
et **en ce que** l'unité d'évaluation est réalisée pour évaluer conjointement les résultats des comparaisons d'au moins deux prises de vue, dans lesquelles une prise de vue est une prise de vue des deux images, prises par lesdits au moins deux récepteurs de lumière, de la tache lumineuse du faisceau de lumière émise dudit au moins un émetteur de lumière.

**2.** Capteur selon la revendication 1,
**caractérisé en ce que** lesdites au moins deux prises de vue ont lieu temporellement l'une après l'autre et/ou au moyen desdits au moins deux émetteurs de lumière (23).

**3.** Capteur selon la revendication 2,
**caractérisé en ce que**
le capteur est réalisé pour adapter l'écart temporel entre lesdites au moins deux prises de vue et/ou la distance desdits au moins deux émetteurs de lumière (23) l'un par rapport à l'autre à une distance prédéterminée attendue entre deux objets voisins (11).

**4.** Capteur selon l'une au moins des revendications précédentes,
**caractérisé en ce qu'**il est prévu un nombre pair de récepteurs de lumière (25), de sorte qu'il est prévu au moins quatre récepteurs de lumière (25), dans lesquels deux récepteurs de lumière respectifs (25) forment une paire de récepteurs de lumière (25), et dans lesquels les deux récepteurs de lumière (25) d'une paire respective sont agencés sur les deux côtés mutuellement opposés du système émetteur de lumière, et l'unité d'évaluation (39) est de préférence réalisée, pour la reconnaissance d'arêtes (41) sur les objets, pour utiliser seulement une paire choisie ou plusieurs paires choisies, et le nombre des paires choisies est en particulier plus faible que le nombre des paires présentes.

**5.** Capteur selon la revendication 4,
**caractérisé en ce que**
le choix dépend d'au moins une des intensités de réception des deux images prises par les deux récepteurs de lumière (25) de la paire respective, et de préférence une paire n'est pas choisie lorsque ladite au moins une des intensités de réception dépasse une valeur seuil supérieure prédéterminée et/ou passe au-dessous d'une valeur seuil inférieure prédéterminée.

**6.** Capteur selon l'une au moins des revendications précédentes,

**caractérisé en ce que**

les deux récepteurs de lumière (25) et le ou les émetteurs de lumière (23) sont prévus dans un agencement en ligne et/ou **en ce que** le capteur est réalisé pour piloter lesdits au moins deux émetteurs de lumière (23) en alternance.

7. Capteur selon l'une au moins des revendications précédentes,
**caractérisé en ce que**
il est prévu au moins un autre récepteur de lumière à résolution locale (43), en particulier au moins deux autres récepteurs de lumière, et les deux autres récepteurs de lumière (43) sont agencés de préférence sur les deux autres côtés mutuellement opposés du système émetteur de lumière.

8. Capteur selon la revendication 7,
**caractérisé en ce que**
l'unité d'évaluation (39) est réalisée pour combiner par calcul l'une avec l'autre deux distances déterminées au moyen d'une triangulation à partir des situations des deux images, prises par les deux autres récepteurs de lumière (43), de la tache lumineuse respective, et pour évaluer le résultat du calcul respectif et de préférence lors de ce calcul, une valeur moyenne, en particulier pondérée, est formée à partir des deux distances.

9. Capteur selon la revendication 8,
**caractérisé en ce que**
la pondération dépend des deux intensités de réception des deux images, prises par les deux autres récepteurs de lumière (43), de la tache lumineuse respective, et de préférence la pondération relative de la distance déterminée à partir de la position de l'image respective est d'autant plus faible que l'intensité de réception relative de l'image respective est plus forte.

10. Capteur selon la revendication 8 ou 9,
**caractérisé en ce que**
l'unité d'évaluation (39) est réalisée pour évaluer en commun les résultats des calculs pour lesdits au moins deux émetteurs de lumière (23).

11. Capteur selon l'une au moins des revendications précédentes,
**caractérisé en ce que**
le système émetteur de lumière et lesdits au moins deux récepteurs de lumière (25) et/ou lesdits au moins deux autres récepteurs de lumière (43) incluent chacun un filtre à polarisation, et de préférence la totalité des filtres à polarisation du capteur sont soit des filtres à polarisation linéaire soit des filtres à polarisation circulaire, et/ou dans lequel la direction de polarisation du filtre à polarisation de récepteurs de lumière respectifs et/ou des autres récepteurs de lumière respectifs correspond ou est opposée de préférence à la direction de polarisation du filtre à polarisation du système émetteur de lumière.

12. Procédé pour la détection d'arêtes sur des objets déplacés par rapport à un capteur optoélectronique, dans lequel au moins un faisceau de lumière émise et en particulier deux faisceaux de lumière émise respectivement collimatés ou focalisés sont engendrés par un système émetteur de lumière,
un vue d'une tache lumineuse engendrée sur un objet par le faisceau de lumière émise respectif est prise par deux récepteurs de lumière agencés sur des côtés mutuellement opposés du système émetteur de lumière,
les deux intensités de réception des deux images, prises par les deux récepteurs de lumière, de la tache lumineuse respective sont comparées l'une à l'autre et le résultat de la comparaison respective est évalué afin de reconnaître une arête d'un objet,
**caractérisé en ce que**
l'évaluation du résultat de la comparaison respective inclut d'évaluer le résultat de la comparaison respective conjointement avec un ou plusieurs résultats d'une ou de plusieurs autres comparaisons,
et les résultats des comparaisons d'au moins deux prises de vue sont évalués conjointement, une prise de vue étant une prise de vue des deux images, prises par lesdits au moins deux récepteurs de lumière, de la tache lumineuse du faisceau de lumière émise dudit au moins un émetteur de lumière.

## Fig. 1

**a)**

11    11    11

Q

**b)**

13

APFEL   APFEL   APFEL   APFEL   APFEL

**c)**

19

I

15

X

17     21

EP 2 390 620 B2

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5841540 A
- US 4217491 A
- JP 58223004 A
- US 5280171 A